## Europäisches Patentamt

## European Patent Office

## Office européen des brevets

(19)

(11) Publication number: **0 028 073**
**A1**

(12)

# EUROPEAN PATENT APPLICATION

(21) Application number: **80303390.1**

(22) Date of filing: **26.09.80**

(51) Int. Cl.³: **A 01 N 57/16**
**// (A01N57/16, 53/00)**

(30) Priority: **01.10.79 US 80968**

(43) Date of publication of application: **06.05.81**
**Bulletin 81/18**

(84) Designated Contracting States: **AT BE CH DE FR IT LI NL SE**

(71) Applicant: **THE DOW CHEMICAL COMPANY, 2030 Abbott Road Post Office Box 1967, Midland, Michigan 48640 (US)**

(72) Inventor: **Larson, Larry Leverne, 1732 South 153rd Avenue Circle, Omaha, Nebraska 68144 (US)**

(74) Representative: **Allard, Susan Joyce et al, BOULT, WADE & TENNANT 27 Furnival street, London EC4A 1PQ (GB)**

(54) Insecticidal synergistic mixtures of 0,0-diethyl 0-(3,5,6-trichloro-2-pyridinyl)phosphorothioate and (+/-)-alpha-cyano 3-phenoxybenzyl-(+/-)-cis-trans-2,2-dimethyl-3-(2,2-dichlorovinyl) cyclopropane carboxylate and method of killing and controlling insects.

(57) Insecticidal compositions containing a mixture of 0,0-diethyl 0-(3,5,6-trichloro-2-pyridinyl)-phosphorothioate and (±)-α-cyano-3-phenoxybenzyl- (±)-cis-trans-2,2-dimethyl-3-(2,2-dichlorovinyl)cyclo-propane carboxylate are disclosed. Such compositions are useful in the kill and control of insects, particularly insects of the Lepidoptera order and especially of the genus Heliothis.

INSECTICIDAL SYNERGISTIC MIXTURES OF O,O-DIETHYL
O-(3,5,6-TRICHLORO-2-PYRIDINYL)PHOSPHOROTHIOATE AND
(±)-α-CYANO-3-PHENOXYBENZYL-(±)-CIS-TRANS-2,2-DIMETHYL-3-
-(2,2-DICHLOROVINYL)CYCLOPROPANE CARBOXYLATE
AND METHOD OF KILLING AND CONTROLLING INSECTS.

This invention relates to new insecticidal compositions which are useful in the kill and control of insects particularly insects of the Lepidoptera order and especially of the genus Heliothis. These compositions comprise mixtures of O,O-diethyl O-(3,5,6-trichloro-2-pyridinyl)phosphorothioate and (±)-α-cyano-3-phenoxybenzyl-(±)-cis-trans-2,2-dimethyl-3-(2,2-dichlorovinyl)cyclopropane carboxylate. It has been found that the toxic ingredients of these compositions are mutually activating.

The O,O-diethyl O-(3,5,6-trichloro-2-pyridinyl)-phosphorothioate employed in accordance with the teachings of the present invention is a solid material melting at ∿41°-42°C.

The (±)-α-cyano-3-phenoxybenzyl-(±)-cis-trans-2,2-dimethyl-3-(2,2-dichlorovinyl)cyclopropane

0028073

carboxylate employed in accordance with the teachings of the present invention is a liquid material which has a refractive index of $n_D^{20}$ of 1.5615.

The new insecticidal composition of the present invention comprises 1 part by weight of O,O-diethyl O-(3,5,6-trichloro-2-pyridinyl)phosphorothioate and from 1/16 to 1 part by weight of (±)-α-cyano-3-phenoxybenzyl-(±)-cis-trans-2,2-dimethyl-3-(2,2-dichlorovinyl)cyclopropane carboxylate, i.e. a ratio of 16:1 to 1:1. A preferred ratio is from 16:1 to 2:1 with the most preferred ratio being from 16:1 to 4:1.

These insecticidal compositions are especially effective in killing and controlling insects, particularly Lepidoptera, especially Heliothis species, which infest crops such as corn, soybeans, tobacco and particularly cotton.

The mixtures of active compounds of the present invention have been found to possess good activity against Heliothis species. Accordingly, the present invention also comprises methods for controlling such insects with a pesticidally effective amount of the active compound mixture. For such uses the unmodified active materials of the present invention can be employed. However, an insecticidally-effective amount of the active materials in admixture with an inert material, as an adjuvant or carrier therefor, in solid or liquid form may also be employed. Thus, for example, the active mixture can be dispersed on a finely divided solid and employed therein as a dust. Also, the active mixture, as liquid concentrates or solid compositions comprising the active mixture, can be dispersed in water, typically with the aid of a wetting agent, and the resulting aqueous dispersion employed as a spray.  In other procedures, the active mixture can be employed as a constituent of organic liquid compositions, oil-in-water and water-in-oil emulsions, or water dispersions, with or without the addition of wetting, dispersing, or emulsifying agents.

Suitable adjuvants of the foregoing type are well known to those skilled in the art.  The methods of applying the solid or liquid pesticidal formulations similarly are well known to the skilled artisan.

As organic solvents used as extending agents there can be employed hydrocarbons, e.g. benzene, toluene, xylene, kerosene, diesel fuel, fuel oil, and petroleum naphtha, ketones such as acetone, methyl ethyl ketone and cyclohexanone, chlorinated hydrocarbons such as carbon tetrachloride, chloroform, trichloroethylene, and perchloroethylene, esters such as ethyl acetate, amyl acetate and butyl acetate, ethers, e.g., ethylene glycol monomethyl ether and diethylene glycol monomethyl ether, alcohols, e.g., methanol, ethanol, isopropanol, amyl alcohol, ethylene glycol, propylene glycol, butyl carbitol acetate and glycerine.  Mixtures of water and organic solvents, either as solutions or emulsions, can be employed.

The active mixtures can also be applied as aerosols, e.g., by dispersing them in air by means of a compressed gas such as dichlorodifluoromethane or trichlorofluoromethane and other such materials.

The active mixture of the present invention can also be applied with adjuvants or carriers such as talc, pyrophyllite, synthetic fine silica, attapulgus clay, kieselguhr, chalk, diatomaceous earth, lime, calcium carbonate, bentonite, fuller's earth, cottonseed hulls, wheat flour, soybean flour, pumice, tripoli, wood flour, walnut shell flour, redwood flour and lignin.

As stated, it is frequently desirable to incorporate a surface active agent in the compositions of the present invention. Such surface active or wetting agents are advantageously employed in both the solid and liquid compositions. The surface active agent can be anionic, cationic or nonionic in character.

Typical classes of surface active agents include alkyl sulfonate salts, alkylaryl sulfonate salts, alkylaryl polyether alcohols, fatty acid esters of polyhydric alcohols and the alkylene oxide addition products of such esters, and addition products of long chain mercaptans and alkylene oxides. Typical examples of such surface active agents include the sodium alkylbenzene sulfonates having 10 to 18 carbon atoms in the alkyl group, alkylphenol ethylene oxide condensation products, e.g., p-isooctylphenol condensed with 10 ethylene oxide units, soaps, e.g., sodium stearate and potassium oleate, sodium salt of propylnaphthalene sulfonic acid, di(2-ethylhexyl)-ester of sodium sulfosuccinic acid, sodium lauryl sulfate, sodium decane sulfonate, sodium salt of the sulfonated monoglyceride of coconut fatty acids, sorbitan sesquioleate, lauryl trimethyl ammonium chloride, octadecyl trimethyl ammonium chloride, polyethylene glycol lauryl ether, polyethylene glycol esters of fatty acids and rosin acids, e.g., Ethofat* 7 and 13, sodium N-methyl-N-oleyl taurate, Turkey Red Oil, sodium dibutyl naphthalene sulfonate, sodium lignin sulfonate, polyethylene glycol stearate, sodium dodecylbenzene sulfonate tertiary dodecyl polyethylene glycol thioether (nonionic 218), long chain ethylene oxide--propylene oxide condensation products, e.g., Pluronic* 61 (molecular weight 1000), polyethylene glycol ester of tall oil acids, sodium octyl phenoxyethoxyethyl sulfate, tris(polyoxyethylene)-sorbitan monostearate (Tween* 60), and sodium dihexyl sulfosuccinate.

The concentration of the active mixtures in liquid formulations generally is from 0.01 to 95 percent by weight or more. Concentrations of from 0.1 to 50 weight percent are often employed. In formulations to be employed as concentrates, the active materials can be present in a concentration of from 5 to 98 weight percent. In dusts or dry formulations, the concentration of the active ingredient can be from 0.01 to 95 weight percent or more; concentrations of from 0.1 to 50 weight percent are often conveniently employed. The active compositions can also contain other compatible additaments, for example, plant growth regulants, pesticides and the like.

The present compositions can be applied by the use of power-dusters, boom and hand sprayers, spray-dusters and by other conventional means. The compositions can also be applied from airplanes as a dust or a spray.

---

* Registered Trade Mark

The active mixtures of this invention are usually applied at an approximate rate of from 1/16 pound to 5 pounds or more per acre (0.07 to 5.6 kg/-hectare), but lower or higher rates may be appropriate in some cases. A preferred application rate is from 1/2 pound to 2 pounds per acre (0.56 to 2.24 kg/-hectare).

The following Example illustrates the present invention and the manner by which it can be practiced.

Example :

A study was conducted to determine the effectiveness and synergistic response of various combinations of O,O-diethyl O-(3,5,6-trichloro-2-pyridinyl)phosphorothioate and (±)-α-cyano-3-phenoxybenzyl-(±)-cis-trans-2,2-dimethyl-3-(2,2-dichlorovinyl)cyclopropane carboxylate in the control of Heliothis insects.

Test solutions were prepared by admixing predetermined amounts of each of the above compounds in predetermined amounts of water containing predetermined amounts of acetone and Triton* X155 surfactant.

Tobacco leaf discs, 3 inches (7.62 cm) in diameter were dipped into one of the above mixtures and placed in an open petri dish to dry. After the leaf discs were dry, 5 late second instar (approximately 3-day old) tobacco bud worms (Heliothis virescens) were placed in each dish and the dishes covered. All treatments were run in triplicate and on two different days. Mortality was recorded 48 hours after treatment with

_____

* Registered Trade Mark

0028073

moribund larvae unable to crawl their own body length being counted as dead. In this test method, intoxication occurred through contact with and feeding upon treated plants.

The results of this study are set forth below in Table I.

TABLE I

| Test No.[1] | Chemical[2] | Amount in PPM | Chemical[3] | Amount in PPM | Ratio of A to B |
|---|---|---|---|---|---|
| 1 | - | - | - | - | - |
| 2 | A | 12.5 | - | - | - |
| 3 | A | 25 | - | - | - |
| 4 | A | 50 | - | - | - |
| 5 | A | 100 | - | - | - |
| 6 | - | - | B | 1.5 | - |
| 7 | - | - | B | 3.1 | - |
| 8 | - | - | B | 6.2 | - |
| 9 | - | - | B | 12.5 | - |
| 10 | - | - | B | 25 | - |

28,547-F

TABLE I (Continued)

| Test No.[1] | Expected Control in Percent[4] | Actual Control in Percent | Percent Increase Over Expected Control[5] |
|---|---|---|---|
| 1 | - | 0 | - |
| 2 | - | 3 | - |
| 3 | - | 10 | - |
| 4 | - | 43 | - |
| 5 | - | 80 | - |
| 6 | - | 6 | - |
| 7 | - | 13 | - |
| 8 | - | 43 | - |
| 9 | - | 67 | - |
| 10 | - | 90 | - |

28,547-F

TABLE I

| Test No.[1] | Chemical[2] | Amount in PPM | Chemical[3] | Amount in PPM | Ratio of A to B |
|---|---|---|---|---|---|
| 11 | A | 12.5 | B | 1.5 | 8:1 |
| 12 | A | 12.5 | B | 3.1 | 4:1 |
| 13 | A | 12.5 | B | 6.2 | 2:1 |
| 14 | A | 12.5 | B | 12.5 | 1:1 |
| 15 | A | 25 | B | 1.5 | 16:1 |
| 16 | A | 25 | B | 3.1 | 8:1 |

28,547-F

TABLE I (Continued)

| Test No.[1] | Expected Control in Percent[4] | Actual Control in Percent | Percent Increase Over Expected Control[5] |
|---|---|---|---|
| 11 | 9 | 10 | 1 |
| 12 | 16 | 17 | 6 |
| 13 | 45 | 47 | 4 |
| 14 | 68 | 67 | 0 |
| 15 | 15 | 37 | 147 |
| 16 | 22 | 30 | 36 |

28,547-F

TABLE I

| Test No.[1] | Chemical[2] | Amount in PPM | Chemical[3] | Amount in PPM | Ratio of A to B |
|---|---|---|---|---|---|
| 17 | A | 25 | B | 6.2 | 4:1 |
| 18 | A | 25 | B | 12.5 | 2:1 |
| 19 | A | 25 | B | 25 | 1:1 |
| 20 | A | 50 | B | 3.1 | 16:1 |
| 21 | A | 50 | B | 6.2 | 8:1 |
| 22 | A | 50 | B | 12.5 | 4:1 |
| 23 | A | 50 | B | 25 | 2:1 |
| 24 | A | 100 | B | 6.2 | 16:1 |

0028073

## TABLE I (Continued)

| Test No.[1] | Expected Control in Percent[4] | Actual Control in Percent | Percent Increase Over Expected Control[5] |
|---|---|---|---|
| 17 | 49 | 50 | 2 |
| 18 | 70 | 73 | 4 |
| 19 | 91 | 93 | 3 |
| 20 | 50 | 30 | 0 |
| 21 | 72 | 73 | 1 |
| 22 | 81 | 80 | 0 |
| 23 | 94 | 100 | 6 |
| 24 | 80 | 83 | 4 |

TABLE I

| Test No.[1] | Chemical[2] | Amount in PPM | Chemical[3] | Amount in PPM | Ratio of A to B |
|---|---|---|---|---|---|
| 25 | A | 100 | B | 12.5 | 8:1 |
| 26 | A | 100 | B | 25 | 4:1 |

(1) Test Nos. 1-10 are control runs with Test 1 being a no chemical control (surfactant/acetone/water alone).

(2) Chemical A represents O,O-diethyl O-(3,5,6-trichloro-2-pyridinyl)phosphorothioate.

(3) Chemical B represents (±)-α-cyano-3-phenoxybenzyl-(±)-cis-trans-2,2--dimethyl-3-(2,2-dichlorovinyl)cyclopropane carboxylate.

TABLE I (Continued)

| Test No.(1) | Expected Control in Percent(4) | Actual Control in Percent | Percent Increase Over Expected Control(5) |
|---|---|---|---|
| 25 | 93 | 97 | 4 |
| 26 | 98 | 100 | 2 |

(4) Expected control equals % control by chemical A + % control by chemical B minus (-) $\dfrac{\% \text{ control by chemical A} \times \% \text{ control chemical B}}{100}$

(5) Percent increase over expected control equals $\dfrac{\text{actual control}}{\text{expected control}} \times 100 - 100$

Data from Table I illustrates that better control was obtained employing the two toxicants together than would be expected from the results obtained from employing each of the two toxicants alone. These data are obtained according to the technique described in Colby, "Calculating Synergistic and Antagonistic Responses of Herbicide Combinations", Weeds, Vol. 15 (1967) pages 20-22 and Colby, "Greenhouse Evaluation of Herbicide Combinations", Proc. NEWCC, No. 19, pages 312-320.

CLAIMS

1. A synergistic insecticidal composition which comprises
an inert carrier and a mixture of toxicants consisting
essentially of 1 part by weight of
O,O-diethyl O-(3,5,6-trichloro-2-pyridinyl)phosphorothioate
and from 1/16 to 1 part by weight of (+)-α-cyano-3-phenoxybenzyl-(+)-cis-trans-2,2-dimethyl-3-(2,2,-dichlorovinyl)
cyclopropane carboxylate.

2. A composition as claimed in claim 1 wherein the
carrier is an inert liquid carrier.

3. A composition as claimed in claim 1 or claim 2 wherein
the mixture of toxicants is present in an amount of from
5 to 95 percent by weight of the total composition.

4. A composition as claimed in claim 1 or claim 2
wherein the composition is present as an aqueous dispersion
and the mixture of toxicants is present in an amount
of from 0.01 to 50 percent by weight of the total
composition.

5. A method of killing and controlling insects which
comprises contacting the insects or  their habitat with an

18.                                    0028073

insecticidally-effective amount of a composition as claimed
in any one of the preceding claims.


6. A method as claimed in claim 5 wherein the insects
are of the genus Heliothis.


7. A method as claimed in claim 5 or claim 6 wherein the
composition is employed in an amount of from 1/16 pound
to 5 pounds per acre (0.07 to 5.6 kg/hectare).



SJA/EA 255

0028073

<u>CLAIMS FOR AUSTRIA</u>

1 . A method of preparing a synergistic  insecticidal composition, which method comprises mixing an inert carrier with a mixture of toxicants consisting essentially of 1 part by weight of O,O-diethyl O-(3,5,6-trichloro-2-pyridinyl) phosphorothioate and from 1/16 to 1 part by weight of (±)-$\alpha$-cyano-3-phenoxyphenyl-(±)-cis-trans-2,2-dimethyl-3-(2,2-dichlorovinyl)cyclopropane carboxylate.

2 . A method as claimed in claim 8 wherein the carrier is an inert liquid carrier.

3 . A method as claimed in claim 8 or claim 9 wherein the mixture of toxicants is admixed with the inert carrier in an amount of from 5 to 95 percent by weight of the total composition.

SJA/EA 255

0028073

Application number

EP 80 30 3390

**European Patent Office**

# EUROPEAN SEARCH REPORT

## DOCUMENTS CONSIDERED TO BE RELEVANT

| Category | Citation of document with indication, where appropriate, of relevant passages | Relevant to claim |
|---|---|---|
| X | RESEARCH DISCLOSURE, no. 161, September 1977, ref. 16.176 Homewell HAVANT, HAMPSHIRE (GB) "Pesticide mixture for use in agricultural and animal health outlets" pages 99-100 * The whole reference * | 1-7 |
| | FR - A - 2 213 014 (ARIES) * Claims; page 1, lines 11-14 * | 1-7 |
| | FR - A - 2 374 849 (THE WELLCOME FOUNDATION) * Claims * | 1-7 |
| | CHEMICAL ABSTRACTS, vol. 89, no. 25, December 18, 1978, ref. 210.430d, page 175 COLUMBUS, OHIO (US) & ZA - A - 77 05 073 (ICI AUSTRA- LIA) (12-06-1978) * Abstract * | 1-7 |

### CLASSIFICATION OF THE APPLICATION (Int. Cl.³)

A 01 N 57/16
/(A 01 N 57/16
53/00)

### TECHNICAL FIELDS SEARCHED (Int. Cl.³)

A 01 N 57/16
53/00

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 22-01-1981 | DECORTI |

EPO Form 1503.1  06.78